# EUROPÄISCHE PATENTSCHRIFT

(11) **EP 3 593 361 B1**
(45) Veröffentlichungstag und Bekanntmachung des Hinweises auf die Patenterteilung: **01.09.2021**
(21) Anmeldenummer: 18710361.9
(22) Anmeldetag: 27.02.2018
(51) Int. Cl.: H01B 3/00, C08G 59/24, C08G 59/50, C08G 59/58, H01B 3/40, H02K 3/30, H02K 3/40

(54) **GLIMMSCHUTZBAND FÜR ELEKTRISCHE HOCHSPANNUNGSMASCHINE**
CORONA SHIELDING BAND FOR ELECTRIC HIGH VOLTAGE MACHINE
BANDE ANTI-EFFLUVES POUR MACHINE ÉLECTRIQUE HAUTE TENSION

(30) Priorität: 10.04.2017 EP 17165740
(43) Veröffentlichungstag der Anmeldung: 15.01.2020
(73) Patentinhaber: Flender GmbH, 46395 Bocholt (DE)
(72) Erfinder: HUBER, Jürgen, 91058 Erlangen (DE); LANG, Steffen, 91352 Hallerndorf (DE); SCHIRM, Dieter, 96149 Breitengüßbach (DE); ÜBLER, Matthias, 92289 Ursensollen (DE)
(74) Vertreter: Michalski Hüttermann & Partner Patentanwälte mbB
(86) Internationale Anmeldenummer: PCT/EP2018/054746
(87) Internationale Veröffentlichungsnummer: WO 2018/188843

(56) Entgegenhaltungen:
- EP-A1- 0 355 558
- EP-A1- 0 424 376
- EP-A1- 0 586 753
- WO-A1-00/13191
- DE-A1-102015 213 815
- DE-A1-102015 214 872
- GB-A- 1 208 718

## Beschreibung

Die Erfindung betrifft ein Glimmschutzband für eine elektrische Hochspannungsmaschine mit phthalsäureanhydridfreien Epoxidharzen als VPI-Imprägnierharz.

Glimmschutzbänder sind Stand der Technik und werden insbesondere bei Hochspannungsmaschinen eingesetzt. Hochspannungsmaschinen sind beispielsweise Turbogeneratoren in einem Kraftwerk zur Erzeugung elektrischer Energie. Derartige Turbogeneratoren weisen insbesondere eine Ständerwicklung auf, an die eine besonders hohe Anforderung bezüglich Festigkeit und Zuverlässigkeit gestellt ist. Insbesondere ist das Isoliersystem der Ständerwicklung an der Grenzfläche zwischen der Hauptisolierung und dem Blechpaket der Ständerwicklung durch eine hohe thermische, thermomechanische, dynamische und elektromechanische Betriebsbeanspruchung stark belastet, wodurch das Risiko einer Beschädigung des Isoliersystems der Ständerwicklung durch Teilentladung hoch ist.

Die Ständerwicklung weist einen mit der Hauptisolierung elektrisch isolierten Leiter auf, der in einer Nut gelagert ist, die in dem Blechpaket vorgesehenen ist. Beim Betrieb des Turbogenerators ist der Ständer einer thermischen Wechselbeanspruchung ausgesetzt, wodurch, hervorgerufen durch unterschiedliche Wärmeausdehnungsgeschwindigkeiten von dem Leiter und der Hauptisolierung, mechanische Spannungen in der Hauptisolierung erzeugt werden können. Dadurch bedingt kann ein örtlich begrenztes Ablösen der Hauptisolierung von dem Leiter auftreten, wodurch Hohlräume zwischen der Hauptisolierung und dem Leiter entstehen, in denen Teilentladungen zünden können. Die Teilentladungen können zu einer Beschädigung der Hauptisolierung führen, wodurch der Turbogenerator nicht betreibbar wäre. An den Nutaustritten steht herkömmlich der Leiter mit seiner Hauptisolierung vor, wo die Grenzfläche zwischen dem Leiter und der Hauptisolierung angeordnet ist.

Die Hauptisolierung der Wicklung gegen das Blechpaket ist ein elektrisch hoch beanspruchtes System. Im Betrieb entstehen hohe Spannungen, welche in dem Isoliervolumen zwischen dem Leiterstab und dem auf Erdpotential liegendem Blechpaket abzubauen sind. An den Kanten der Bleche im Blechpaket entstehen Feldüberhöhungen, die ihrerseits Teilentladungen hervorrufen und schließlich zu einer vorzeitigen Alterung und im schlimmsten Fall zu einer Zerstörung der Isolierung führen.

Die Austrittsstelle der Ständerstäbe/-spulenschenkel aus dem Blechpaket, die Nutaustrittsstelle, ist charakterisiert durch das Aufeinandertreffen zweier Isolierstoffe. In diesem Bereich bildet sich eine Grenzschicht zwischen der im Aggregatzustand festen Hauptisolierung und einem gasförmigen Medium, meist Luft oder Wasserstoff, aus. Durch die resultierende dielektrische Trennfläche zwischen der Hauptisolierung und der Luft entsteht eine klassische Gleitanordnung, die neben einer rein radialen Feldkomponente E_{rad}, wie sie im Bereich des Blechpakets vorkommt, zusätzlich eine tangentiale Feldkomponente Etan hat. Die dadurch tangential beanspruchten Grenzflächen, beispielsweise Hauptisolierung zu Luft, stellen besondere Schwachstellen in einer Isolieranordnung dar. Aufgrund der geringen elektrischen Festigkeit der Luft kann es schon bei vergleichsweise geringen Spannungen in diesem Bereich zu Teilentladungen, bedingt durch die lokale tangentiale Feldstärkenerhöhung von ca. 0,64kV/mm bei sauberer Oberfläche, kommen, die sich bei weiterer Steigerung der Spannung zu Gleitentladungen entlang der Isolierstoffoberfläche bis zu einem elektrischen Durchschlag, der durch einen Leiter-Erde-Kurzschluss charakterisiert ist, ausweiten können.

Diese kritische Belastung tritt vor allem während der Prüfungen von elektrisch rotierenden Hochspannungs-Maschinen auf. Bei der Berechnung und Auslegung des Endenglimmschutzes ist zu beachten, dass die höchste elektro-thermische Belastung des Systems nicht bei Betriebsspannung, sondern vielmehr bei der Kontrolle des Isoliersystems mit erhöhter Prüfspannung erfolgt. Durch Bildung von Gleitentladungen an der Oberfläche wird der Isolierstoff langfristig zerstört.

Insbesondere kann es durch Erwärmung, Erosion und vor allem auch durch Ladungsträgerinjektion durch Teilentladungen zur Zerstörung des Isolierstoffs und damit zu einer Beschädigung des Isolationssystems und schließlich zum Überschlag als Folge der Zerstörung des Endenglimmschutzes kommen. Durch lokale Wärmeentwicklung kann es aufgrund einer Arbeitspunktverschiebung zusätzlich zur Störung der Funktionsweise des Isoliersystems und zu einem Ansteigen der dielektrischen Verluste kommen. Dabei wird die Hauptisolierung ausgehend von der Inneren Potential Steuerung - IPS - in radialer Richtung bis zum Außenglimmschutz - AGS - abgebaut.

Der AGS hat einen gewissen Quadratwiderstand, der einen bestimmten unteren und oberen Grenzwert nicht unter- respektive überschreiten darf. Bei Unterschreitung des Grenzwertes können hohe induzierte Kreisströme, welche sich über die Enden des Blechpakets und dem Außenglimmschutz schließen, zu stromstarken Lichtbögen führen, dadurch entsteht so genannte Vibration und/oder Sparking. Bei zu hohem Widerstand kann es wiederum zu Hochspannungsfunkenerosion kommen. Idealerweise hat ein Außenglimmschutz eine ausgeprägte Anisotropie im Widerstandsverhalten, der Widerstand in axialer Richtung sollte hoch und in radialer Richtung gering sein. Diese Phänomene sind auch in einschlägiger Fachliteratur nachzulesen, beispielsweise in "Hochspannungstechnik" von A. Küchler, Springer Verlag, Vol 15, 2009 ISBN 3-540-78412-8 und "Design Dependent Slot Discharge and Vibration Sparking on High Voltage Windings" von M. Liese und M. Brown, IEEE Trans DIE, August 2008, pp 927-932.

Um Teilentladungen zu vermeiden, wird die Hauptisolierung von Wicklungsstäben /-Spulen und allen vergleichbaren Anordnungen bei elektrischen Betriebsmitteln mit höherer Bemessungsspannung wie Trafos, Durchführungen, Kabel etc. bei Betriebsspannungen von einigen kV mit einer inneren und einer äußeren Leitschicht gegen Hohlräume und Ablösungen abgeschirmt, eben durch IPS und AGS, wie oben erläutert.

Die Leitschichten des IPS und des AGS bestehen in der Regel aus Ruß- und/oder Graphit-haltigem Lack auf Basis einer polymeren Matrix. Keine Komponente des Lacks, weder der Ruß/Graphit, noch die polymere Matrix sind resistent gegenüber Teilentladungen. Trifft eine Teilentladung auf die Leitschicht, reagiert beispielsweise der Ruß mit dem umgebenden Sauerstoff zu CO₂ ab und löst sich förmlich in Luft auf. Gleiches gilt für die polymere Matrix. Die erforderliche Anisotropie ist bislang nicht gezielt einstellbar.

Aus der EP 2362399 und aus der DE 19839285 C1 sind Glimmschutzsysteme bekannt, in denen ein planarer Füllstoff gebunden in einer polymeren Matrix vorliegt. Der beschriebene planare Füllstoff besteht aus einem Glimmersubstrat, das mit dotiertem Zinnoxid beschichtet ist. Der Füllstoff ist insbesondere resistent gegenüber Teilentladungen.

Ganz grundsätzlich ist bei den mit planaren Füllstoffen gefüllten polymeren Matrizen der elektrische Widerstand in Bandrichtung deutlich geringer als der senkrecht durchs Band, was wiederum die elektrische Leitfähigkeit in radialer Richtung vermindert.

Zur Reduzierung der Feldstärkenüberhöhung im Bereich des Endes des Außenglimmschutzes wird eine kapazitiv-resistive Feldsteuerung eingesetzt. Die kapazitive Steuerung wird durch die Hauptisolierung realisiert, während die resistive Steuerung durch den Endenglimmschutz (EGS) stattfindet. Hierbei handelt es sich um leitfähige Oberflächenbeläge, die einen quadratischen Widerstand von ca. 10⁸ bis 10¹⁰ Ohm haben. Mit Hilfe der starken Nichtlinearität des Widerstandes der eingesetzten Materialien im EGS wird versucht, das elektrische Feld aus den Bereichen hoher Feldstärken zu verdrängen. Dieses hat in der Verringerung des spezifischen Widerstands mit steigender elektrischer Feldstärke ihre Ursache.

Die ohmschen Oberflächenbeläge können entweder durch Anstriche aus trocknenden und/oder härtbaren Harzen, welche unmittelbar auf die Isolierstoffoberfläche aufgebracht werden und/oder zusammen mit der Herstellung der Bänder hergestellt werden.

Die Hauptisolierung der Wicklung wird dann mit einem Imprägnierharz und beispielsweise durch ein damit ausgeführtes Vakuum-Pressure-Impregnating- Verfahren (VPI-Verfahren) imprägniert. Dabei kommen herkömmlich vor allem Epoxidharze mit säureanhydridischen, insbesondere Phthalsäure-anhydridischen Härtern zum Einsatz. Wegen der toxischen Bedenken gegen die uneingeschränkte Verwendung von Phthalsäureanhydrid werden zunehmend phthalsäureanhydrid-freie VPI-Imprägnierharze eingesetzt. Aus der WO2016/124387 ist beispielsweise ein Isoliersystem auf Basis eines Epoxidharzes mit einem Phthalsäureanhydrid-freien VPI-Imprägnierharz bekannt.

Das Glimmschutzband umfasst auf einem flexiblen Träger wie Folie, Vlies und/oder Gewebe, das nachfolgend als Trägerband bezeichnet wird, ein aufgebrachtes elektrisch leitfähiges und/oder halbleitfähiges Material, das mit dem Trägerband und miteinander und gegebenenfalls mit einer abschließenden Decklage und/oder eines weiteren Lage mittels eines Bandklebers, der eine polymere Matrix umfasst, verbunden ist.

Dieser Bandkleber umfasst den darin gelösten und/oder feinstverteilten Bandbeschleuniger. Der Bandbeschleuniger dient zur Gelierung eines dünnflüssigen Imprägnierharzes, das beispielsweise in einer Vakuum-Druck-Imprägnierung (VPI) auf die Ständerwicklungen aufgebracht wird. Nach dem Gelieren bei erhöhter Temperatur werden die imprägnierten Ständerwicklungen im Statorblechpaket thermisch gehärtet.

Die neu eingesetzten Band-Beschleunigersubstanzen für anhydridfreie, insbesondere phthalsäureanhydridfreie Imprägnierharze sind jedoch bislang noch nicht auf die polymeren Matrixmaterialien und/oder die Füllstoffe, respektive deren Beschichtungen in den Bandwicklungen abgestimmt, so dass es durch chemische Unverträglichkeit unter Umständen zu einer Entmischung und/oder Zersetzung der wertvollen Lackmaterialien, Füllstoffe, deren Beschichtungen und/oder Isolierbänder durch neuartige Band-Beschleuniger kommen kann.

Aus der WO 2000/13191 A1 ist ein Glimmschutzband bekannt, bei dem eine Wickelbandisolierung in einem mit Anhydrid-haltigem Härter gehärteten Imprägnierharz vorliegt, wobei das Imprägnierharz mit elektrisch leitfähigen Füllstoffen gefüllt ist.

Aufgabe der vorliegenden Erfindung ist es daher, ein Glimmschutzband zur Weiterverarbeitung im VPI-Verfahren bereitzustellen, ein Trägerband, zumindest einen eingelagerten Beschleuniger für das Imprägnierharz und ein polymeres Matrixmaterial mit einem elektrisch leitfähigen Füllstoff umfassend, wobei der eingelagerte Beschleuniger für das Säureanhydridfreie VPI-Imprägnierharz auf Epoxidharzbasis härtungsbeschleunigend wirkt. Deshalb ist die Aufgabe der vorliegenden Erfindung ein Glimmschutzband als Isolierband anzugeben, welches eine verbesserte Lebenszeit aufweist.

Diese Aufgabe wird durch den Gegenstand der vorliegenden Anmeldung, wie er in der Beschreibung und den Ansprüchen offenbart ist, gelöst.

Dementsprechend ist Gegenstand der vorliegenden Erfindung ein Glimmschutzband für die Weiter-Verarbeitung zur Wickelisolation mittels VPI-Imprägnierung, zumindest ein Trägerband mit Füllstoff in polymerer Matrix und zumindest einem eingelagertem Band-Beschleuniger für das Imprägnierharz umfassend, dadurch gekennzeichnet, dass die polymere Matrix zumindest einen Polyvinylalkohol als Bindemittel umfasst und dass der zumindest eine eingelagerte Band-Beschleuniger für das Imprägnierharz ausgewählt ist aus der Gruppe folgender chemischer Verbindungs-Klassen **I** bis **IV** und **VI** mit **R₂** an **IV** ist gleich oder ungleich und **R₂** = **H, V** : 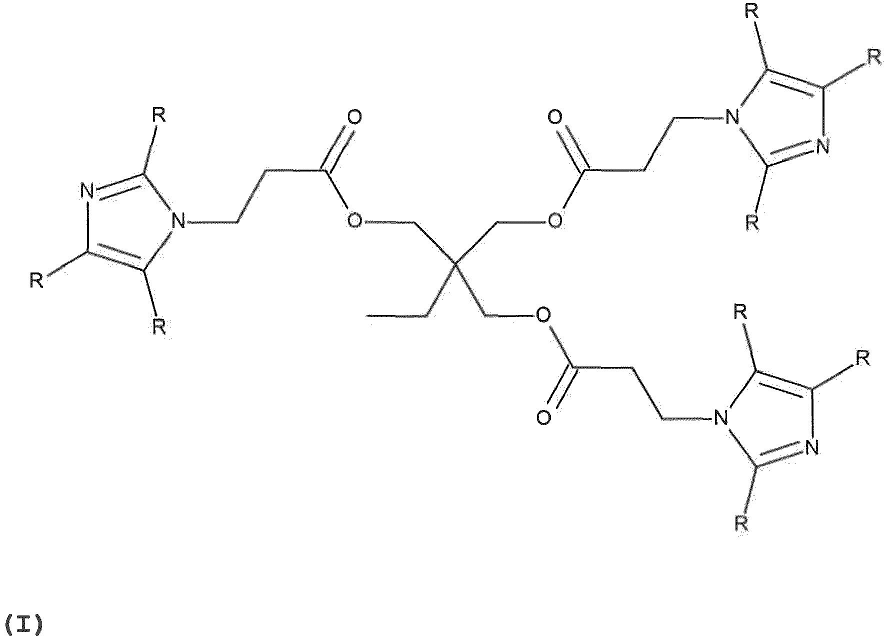
**(I)** ist ein Addukt aus Trimethylolpropantriacrylat und einem oder
   mehreren 1H-Imidazol-derivat(en); beispielsweise mit **R** gleich oder ungleich und
   **R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl,
   wobei die Substituenten am Phenylrest **R_{phenyl}** wieder gleich oder ungleich und ausgewählt aus der folgenden Gruppe sein können:
      **R_{phenyl}** = Alkyl (linear und verzweigt), Alkoxy, Fluor, Chlor, Brom, Iod, Aldehyd, Keton, Säureester, Säureamid, Phosphonsäurederivat und/oder Sulfonsäurederivat; 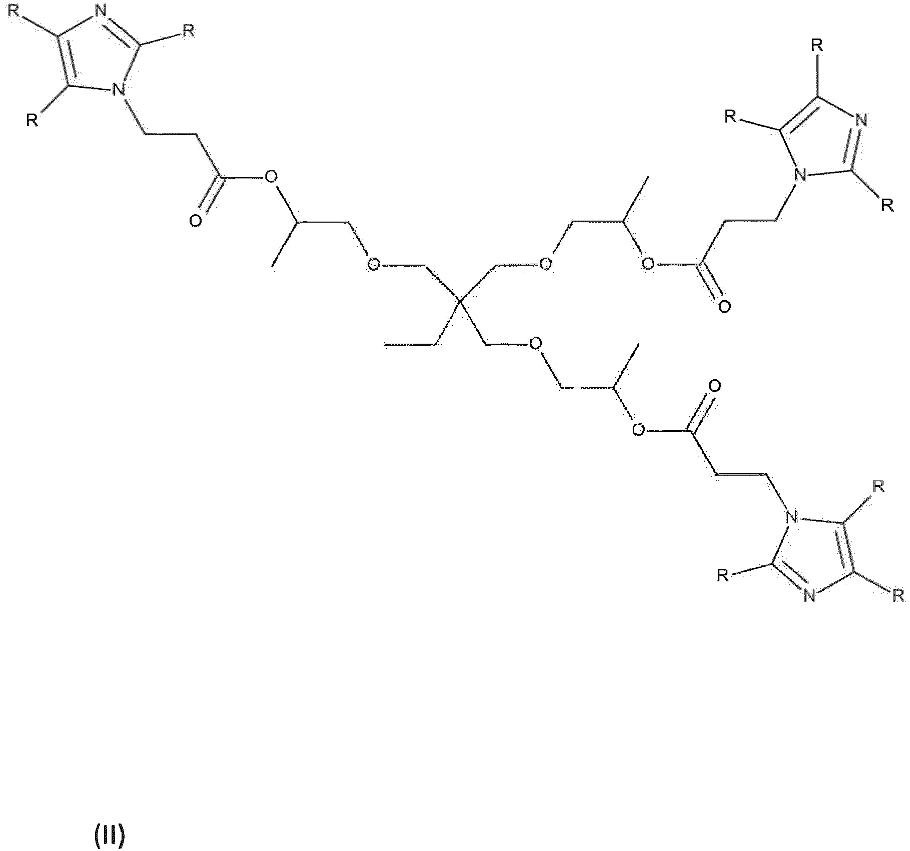
**(II)** stellt ein Addukt aus Trimethylolpropanpropoxylattriacrylat und 1H-Imidazolderivaten dar; beispielsweise mit
   **R** gleich oder ungleich und
   **R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl, wobei die Substituenten **R_{phenyl}** am Phenylrest wieder gleich oder ungleich und ausgewählt aus der folgenden Gruppe sein können:
      **R_{phenyl}** = Alkyl (linear und verzweigt), Alkoxy, -F, -Cl, -Br, -J, Aldehyd, Keton, Säureester, Säureamid, Phosphonsäurederivat und/oder Sulfonsäurederivat; 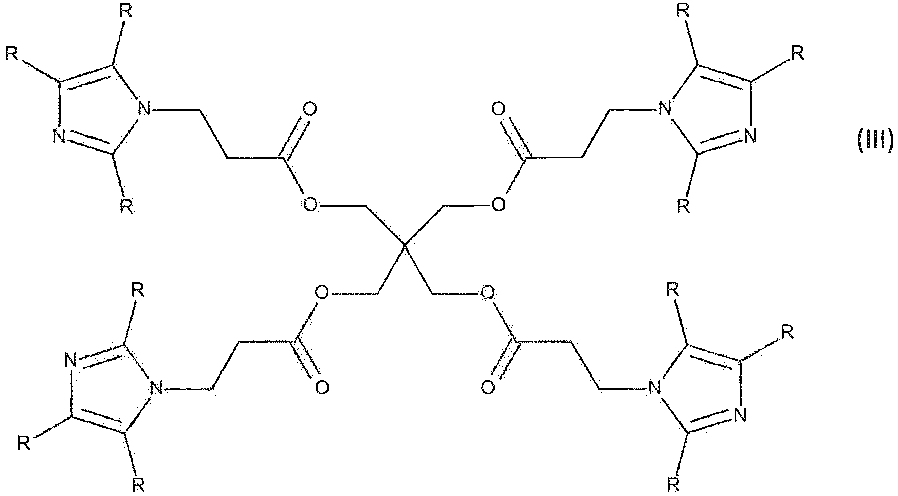
**(III)** stellt ein Addukt aus Pentaerythritoltetraacrylat (PETA) und einem oder mehreren 1H-Imidazolderivat(en) dar; beispielsweise mit **R** gleich oder ungleich und
   **R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl,
   wobei die Substituenten am Phenylrest **R_{phenyl}** wieder gleich oder ungleich und ausgewählt aus der folgenden Gruppe sein können:
      **R_{phenyl}** = Alkyl (linear und/oder verzweigt), Alkoxy, Fluor, Chlor, Brom, Iod, Aldehyd, Keton, Säureester, Säureamid, Phosphonsäurederivat und/oder Sulfonsäurederivat; 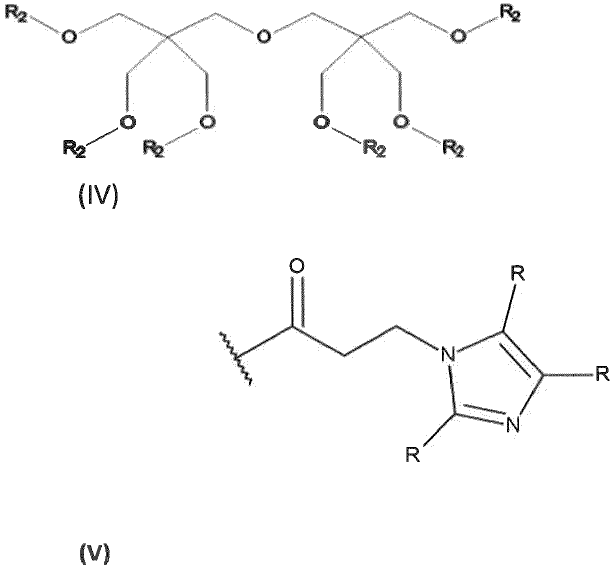
   wobei R₂ der Struktur (**IV**) ein Wasserstoffatom oder die hier gezeigte funktionelle Gruppe (**V**) sein kann und
**(IV)** ist ein Addukt aus Dipentaerythritolpenta-/hexaacrylat (DPHA) und einem oder mehreren 1H-Imidazolderivat(en); beispielsweise mit **R** gleich oder ungleich und
   **R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl, wobei die Substituenten am Phenylrest **R_{phenyl}** wieder gleich oder ungleich und ausgewählt aus der folgenden Gruppe sein können:
      **R_{phenyl}** = Alkyl (linear und verzweigt), Alkoxy, Fluor, Chlor, Brom, Iod, Aldehyd, Keton, Säureester, Säureamid, Phosphonsäurederivat und/oder Sulfonsäurederivat und
      **R2** wie oben (**V**) angegeben;
und **VI** einer Komplex-Verbindung aus Metallsalzen, insbesondere Übergangsmetallsalzen, insbesondere komplexen Salzen des Zink, Kupfer, Eisen und/oder Aluminium mit Imidazol- und/oder Pyrazolliganden, abgeleitet von den Strukturen **VIa** und **VIb** 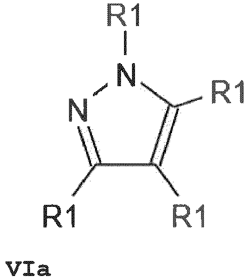
und 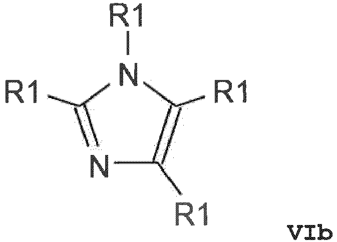 wobei gilt
R1 = gleich oder ungleich und H-, Alkyl-, Aryl-, Acyl-, Cyanoalkyl-, Hydroxyalkyl-, Cyanoaryl- und/oder Hydroxyaryl ist.

Insbesondere Imidazole und/oder Pyrazole, ausgewählt aus der Liste folgender Verbindungen sind hier erfolgreich als Liganden für die Komplexverbindungen einsetzbar:
1,2-Dimethylimidazol (CAS 1739-84-0),
1-Decyl-2-Methylimidazol,
1-Butyl-2-Methylimidazol,
1-Butyl-2-Phenylimidazol,
1H-2-Methylimidazol (CAS-Nr. 693-98-1),
1H-Imidazol (CAS-Nr. 288-32-4),
1H-2-Ethylimidazol (CAS-Nr. 1072-62-4),
1H-2-Propylimidazol (CAS-Nr. 50995-95-4),
1H-2-iso-Propylimidazol (CAS-Nr. 36947-68-9),
1H-2-Butylimidazol (CAS-Nr. 50790-93-7),
1H-2-iso-Butylimidazol (CAS-Nr. 61491- 92-7),
1H-2-tert-Butylimidazol (CAS-Nr. 36947-69-0),
1H-4-tert-Butylimidazol (CAS-Nr. 21149-98-4),
1H-4(5)-Methylimidazol (CAS-Nr. 822-36-6),
1H-2-Ethyl-4-Methylimidazol (CAS-Nr. 931-36-2),
1H-4-Methyl-2-Phenylimidazol (CAS-Nr. 827-43-0),
1H-4-Phenylimidazol (CAS-Nr. 670-95-1),
1H-5-Methyl-2-Phenylimidazol-4-methanol (CAS-Nr. 13682-32-1),
1H-2,4-Dimethylimidazol (CAS-Nr. 930-62-1),
4(5)-(Hydroxymethyl)imidazol (CAS.-Nr. 822-55-9),
1H-3-Phenylpyrazol (CAS-Nr. 2458-26-6),
1H-5-Methylpyrazol (keine CAS-Nr.),
1H-3,4-Dimethylpyrazol (CAS-Nr. 2820-37-3),
1H-3-tert-Butylpyrazol (CAS-Nr. 15802-80-9),
1H-4-Ethylpyrazol (CAS-Nr. 17072-38-7),
1H-Pyrazol (CAS-Nr. 288-3-1),
1H-3,5-Dimethylpyrazol (CAS-Nr. 67-51-6).

Nach einer vorteilhaften Ausführungsform der Erfindung ist im Trägerband und/oder in der polymeren Matrix zumindest ein Band-Beschleuniger der Art, wie sie Gegenstand der Anmeldungen DE 102015214872, der DE 10 2016223656.3 und/oder DE 102016223662.8 sind, eingelagert.

Der zumindest eine Band-Beschleuniger kann im Lack, also in der polymeren Matrix mit Füllstoff und/oder in Poren des Trägerbandes eingelagert und so dem VPI-Imprägnierharz zugänglich sein.

Der Beschleuniger im Trägerband ist beispielsweise in einer Menge im Bereich von 0,1 g/m² bis 15 g/m², insbesondere von 0,5 g/m² bis 10 g/m², bevorzugt in einer Menge von 2 g/m² bis 7 g/m² enthalten.

Dabei können die eingelagerten Band-Beschleuniger gleich oder ungleich sein.

Nach einer vorteilhaften Ausführungsform der Erfindung ist das VPI-Imprägnierharz der elektrischen Maschine ein säureanhydridfreies, insbesondere Phthalsäureanhydrid-freies, Harz auf Epoxidbasis, bevorzugt zumindest ein Epoxidharz auf Bisphenol-A- und/oder Bisphenol-F-Diglycidylether- und/oder Epoxynovolak-Basis. Beispielsweise liegt zumindest ein Imprägnierharz auf der Basis von Bisphenol-A- und/oder Bisphenol-F-Diglycidylether- und/oder Epoxynovolak vor.

Das Band, das zur Herstellung der Isolationswicklung eingesetzt wird umfasst zumindest ein Bindemittel, in der Regel polymeres Matrixmaterial und planare Füllstoffe in zumindest einer Fraktion nach Material, Form, Größe, die gegebenenfalls eine Beschichtung aufweisen.

Nach einer vorteilhaften Ausführungsform der Erfindung umfasst die polymere Matrix mehrere Polyvinylalkohol(e).

Polyvinylalkohol mit der CAS Nummer 9002-89-5 und der Summenformel (-C₂H₄O-)ₙ der Wiederholeinheit, ist ein Thermoplast und liegt handelsüblich als ein kristalliner, weiß bis gelblicher wasserlöslicher Kunststoff vor.

Im Gegensatz zu den meisten Vinylpolymeren kann Polyvinylalkohol nicht durch einfache Polymerisation des entsprechenden Monomers hergestellt werden. Das dafür notwendige Monomer Ethenol existiert lediglich in seiner tautomeren Form als Acetaldehyd. Polyvinylalkohole werden durch Umesterung und/oder durch alkalische Verseifung von Polyvinylacetat gewonnen. Die Hydrolyse ist gut steuerbar. Es gibt Polyvinylalkohol-Copolymerisate und verschiedene Derivate, bei denen ein Teil der Hydroxylgruppen durch chemisch ähnliche reagierende Gruppen wie Siloxane ersetzt sind.

Polyvinylalkohole sind in der Regel leicht verzweigt, bedingt durch Kettenübertragungen bei der Synthese von Polyvinylacetat. Der Polymerisationsgrad beträgt etwa 500 bis 2500. Teilverseifte Sorten von Polyvinylalkohol - kurz PVAL genannt - mit ca. 13 % Polyvinylacetat -kurz PVAC - sind gut wasserlöslich mit steigendem Verseifungsgrad nimmt die Wasserlöslichkeit ab.

Nach einer vorteilhaften Ausführungsform der Erfindung umfasst die polymere Matrix im Band Polyvinylalkohol mit quervernetzten Anteilen.

Nach einer vorteilhaften Ausführungsform umfasst die polymere Matrix im Band einen oder mehrere mit einem Aldehydmodifizierten Melamin quervernetzte Polyvinylalkohol(e).

Nach einer vorteilhaften Ausführungsform der Erfindung umfasst die polymere Matrix zumindest ein polymeres Bindemittel, das ein Polyvinylalkohol ist, der einen Hydrolysegrad von mindestens 80 mol%, insbesondere mindestens 85 mol% und bevorzugt von mindestens 87 oder mehr mol% hat.

Nach einer weiteren vorteilhaften Ausführungsform der Erfindung umfasst die polymere Matrix zumindest einen Polyvinylalkohol, bei dem die Hydroxylgruppen des Polyvinylalkohols zumindest teilweise durch Siloxangruppen substituiert sind.

Nach einer vorteilhaften Ausführungsform der Erfindung umfasst der elektrisch leitfähige Füllstoff hauptsächlich Komponenten wie beispielsweise eine Kohlenstoffmodifikation - bevorzugt als Ruß, Graphit und/oder Carbon Nanotubes.

Nach einer weiteren vorteilhaften Ausführungsform der Erfindung umfasst der elektrisch leitfähige Füllstoff ein Siliziumcarbid, insbesondere ein dotiertes Siliziumcarbid. Nach einer weiteren vorteilhaften Ausführungsform der Erfindung umfasst der elektrisch leitfähige Füllstoff Partikel, die zumindest zum Teil aus Metalloxid, insbesondere einem Mischoxid, sind.

Als Metalloxid wird vorliegend eine Verbindung zwischen einem Metall und Sauerstoff bezeichnet, wobei der Sauerstoff in der Verbindung formell, also vereinfacht, 2-fach negativ geladen ist. Grundsätzlich ist der Sauerstoff in der Verbindung der elektronegative Partner. Daher die Bezeichnung "-oxid".

Als Mischoxid - kurz MOX - wird entsprechend eine Substanz bezeichnet, in der mehr als ein Metall-Kation in einer oxidischen Verbindung vorliegt, also beispielsweise Titan-Aluminium-Oxid oder Eisen-Nickel-Oxid oder ähnliches.

Nach einer vorteilhaften Ausführungsform der Erfindung wird ein Füllstoff eingesetzt, der eine Beschichtung aus einem dotierten Zinnoxid und/oder einem dotierten Titanoxid hat und/oder der aus einem dotierten Zinnoxid und/oder Titanoxid besteht.

Die Füllstoffpartikel können als Hohlkörper, als massive Teilchen, als beschichtete Teilchen und/oder als Core-Shell-Partikel vorliegen.

Nach einer vorteilhaften Ausführungsform der Erfindung macht der elektrisch leitfähige Füllstoff mindestens 45 Gew% der Füllstoff-Bindemittel-Massenteile, die das Trägerband bilden, aus.

Das Trägerband wird verwendet, um die Wickelisolierung herzustellen. Das Trägerband umfasst zumindest eine Fraktion plättchenförmiger Partikel, die durch ein Bindemittel zusammengehalten werden und somit das Band bilden. Zur Einstellung des elektrischen Widerstands kann es dabei vorteilhaft sein, die Fraktion an plättchenförmigen Füllstoffpartikeln mit kugelförmigen, also globularen Füllstoffpartikeln zu ergänzen. Nach einer vorteilhaften Ausführungsform der Erfindung hat das Trägerband ein Flächengewicht von < 100 g/m².

Nach einer vorteilhaften Ausführungsform umfasst das Trägerband Verstärkungsfasern, beispielsweise in Form eines Gewebes und/oder eines Faserverbunds, in den die polymere Matrix mit dem elektrisch leitfähigen Füllstoff eingebracht ist und/oder mit dem sie durch das Bindemittel verklebt ist.

Diese Verstärkungsfasern sind beispielsweise Glasfasern und/oder Polyethylenterephthalat - PET-Fasern.

Nach einer vorteilhaften Ausführungsform ist das Trägerband mit einer Primerung beschichtet. Dabei ist es insbesondere vorteilhaft, wenn das Trägerband mit einer Primerung von bis zu 5 g/m² beschichtet ist.

Insbesondere hat sich als vorteilhaft erwiesen, wenn die Primerung des Trägerbandes Polyvinylalkohol, Epoxy- und/oder Aminfunktionalitäten umfasst-.

Als Primerung wird vorliegend eine grundierende Beschichtung bezeichnet, durch die die Verstärkungsfasern und/oder das Trägerband, -gewebe in ihrer Schnittfestigkeit verbessert werden und für eine Benetzung mit der polymeren Matrix vorbereitet werden.

Nach einer vorteilhaften Ausführungsform der Erfindung liegt die Menge der Beschichtung des Trägerbandes mit der polymeren Matrix, die die zumindest eine Fraktion an elektrisch leitfähigem Füllstoff und/oder gegebenenfalls auch den zumindest einen Band-Beschleuniger enthält im Bereich von 20 g/m² bis 100 g/m², insbesondere im Bereich von 20 g/m² bis 60 g/m², besonders bevorzugt im Bereich von 30 g/m² bis 45 g/m².

Nach einer vorteilhaften Ausführungsform der Erfindung wird das Glimmschutzband zur Herstellung eines Außenglimmschutzsystems und/oder eines Innenpotentialsteuerungssystems und/oder eines Endenglimmschutzsystems eingesetzt.

Dabei ist es vorteilhaft, wenn der Quadrat- und/oder Flächenwiderstand eines durch ein Glimmschutzband gemäß der vorliegenden Erfindung hergestellten Außenglimmschutzsystems und/oder eines Innenpotentialsteuerungssystems im Bereich von 0,01 kOhm bis 100 kOhm, gemessen bei einer Feldstärke von 1 V/mm liegt.

Insbesondere liegen die Quadrat und/oder Flächenwiderstandswerte einer derartigen Innenpotentialsteuerung bevorzugt im Bereich von 0,01 kOhm bis 10 kOhm, bevorzugt im Bereich von 0,05 bis 7 kOhm und besonders bevorzugt im Bereich von 2,5 bis 5 kOhm und/oder die Quadratwiderstandswerte eines derartigen Außenglimmschutzes im Bereich von 0,1 bis 100 kOhm, insbesondere von 0,1 kOhm bis 90 kOhm und besonders bevorzugt im Bereich von 5 kOhm bis 50 kOhm, jeweils gemessen bei einer Feldstärke von 1 V/mm.

Bei der Herstellung eines Endenglimmschutzes mittels eines Glimmschutzbandes gemäß der vorliegenden Erfindung ist es vorteilhaft, wenn ein Flächenwiderstand im Bereich von 1x10⁸ bis 1 x 10¹², insbesondere im Bereich von 1x10⁸ bis 1x10¹³ Ohm bei einer Feldstärke von 1 V/mm vorliegt.

Die Erfindung betrifft ein Glimmschutzband für eine elektrische Hochspannungsmaschine mit phthalsäureanhydridfreien Epoxidharzen. Das hier erstmals vorgestellte Glimmschutzband ist mit seinen Komponenten, insbesondere der verbindenden polymeren Matrix und dem eingelagerten Band-Beschleuniger auf die neuen phthalsäureanhydrid-freien VPI-Imprägnierharze auf Epoxidharzbasis eingestellt. Dazu liegt in der polymeren Matrix zumindest ein Anteil an Polyvinylalkohol vor.

## Patentansprüche

1. Glimmschutzband als Isolierband für die Weiter-Verarbeitung zur Wickelisolation mittels Vakuum-Pressure-Impregnating-Verfahrens mit einem anhydridfreien Imprägnierharz, zumindest ein Trägerband, eine polymere Matrix mit eingebettetem elektrisch leitfähigen und/oder halbleitfähigen Füllstoff und zumindest einen eingelagerten Band-Beschleuniger für das Imprägnierharz umfassend, **dadurch gekennzeichnet, dass** die polymere Matrix zumindest einen Polyvinylalkohol umfasst und dass der eingelagerte Band-Beschleuniger für das Imprägnierharz ausgewählt ist aus der Gruppe folgender chemischer Verbindungs-Klassen **I** bis **IV** und **VI** mit **R₂** an **IV** ist gleich oder ungleich und **R₂** = **H, V** : 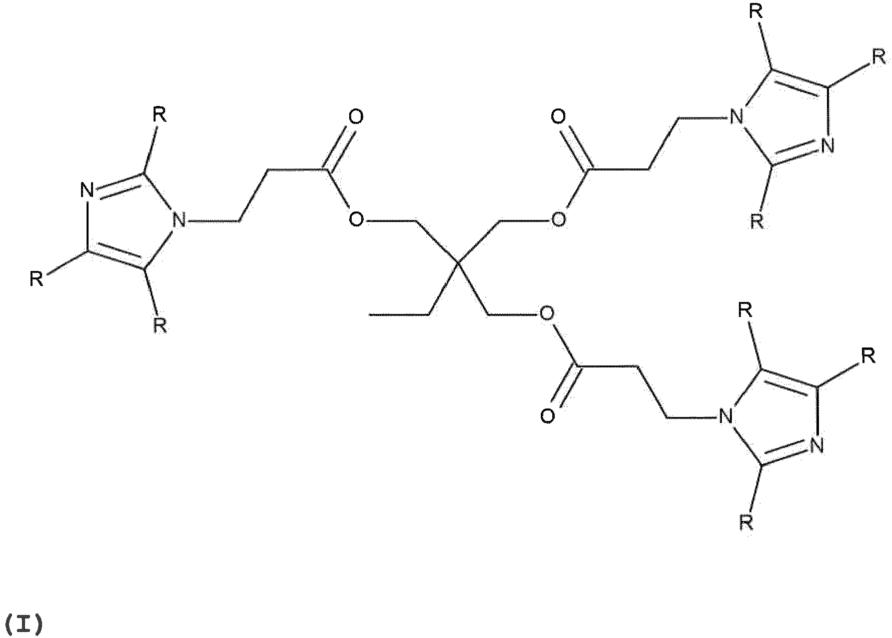
- **(I)** ist ein Addukt aus Trimethylolpropantriacrylat - und einem oder
mehreren 1H-Imidazol-derivat(en); beispielsweise mit **R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl,
wobei die Substituenten am Phenylrest **R_{phenyl}** wieder gleich oder ungleich und ausgewählt aus der folgenden Gruppe sein können:
**R_{phenyl}** = Alkyl (linear und verzweigt), Alkoxy, Fluor, Chlor, Brom, Iod, Aldehyd, Keton, Säureester, Säureamid, Phosphonsäurederivat und/oder Sulfonsäurederivat; 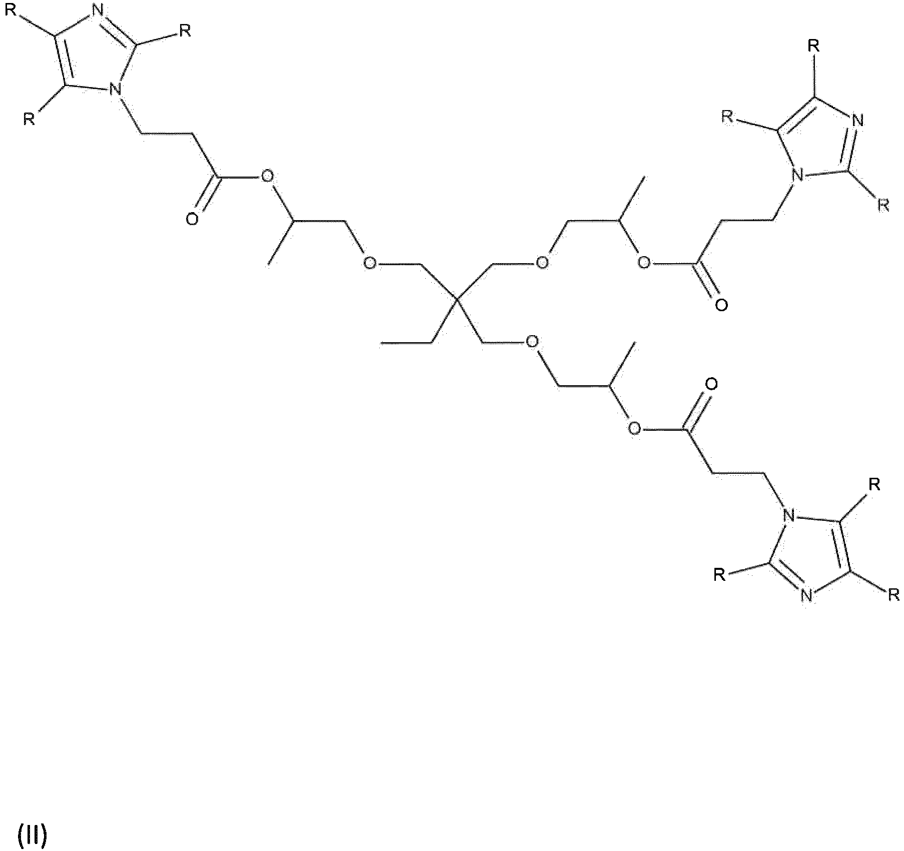
- **(II)** stellt ein Addukt aus Trimethylolpropanpropoxylattriacrylat und 1H-Imidazolderivaten dar; beispielsweise mit
**R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl, wobei die Substituenten **R_{phenyl}** am Phenylrest wieder gleich oder ungleich und ausgewählt aus der folgenden Gruppe sein können:
**R_{phenyl}** = Alkyl (linear und verzweigt), Alkoxy, -F, -Cl, -Br, -J, Aldehyd, Keton, Säureester, Säureamid, Phosphonsäurederivat und/oder Sulfonsäurederivat; 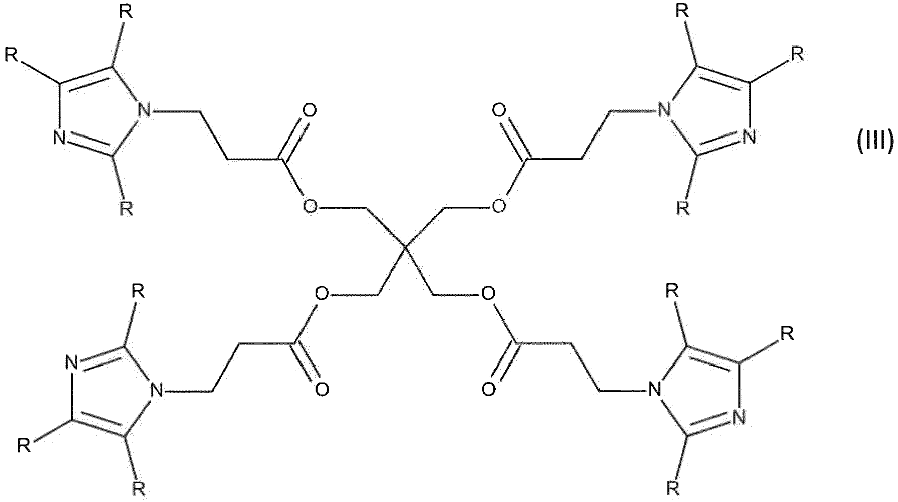
- **(III)** stellt ein Addukt aus Pentaerythritoltetraacrylat (PETA) und einem oder mehreren 1H-Imidazolderivat(en) dar;
beispielsweise mit **R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl,
wobei die Substituenten am Phenylrest **R_{phenyl}** wieder gleich oder ungleich und ausgewählt aus der folgenden Gruppe sein können:
**R_{phenyl}** = Alkyl (linear und/oder verzweigt), Alkoxy, Fluor, Chlor, Brom, Iod, Aldehyd, Keton, Säureester, Säureamid, Phosphonsäurederivat und/oder Sulfonsäurederivat; 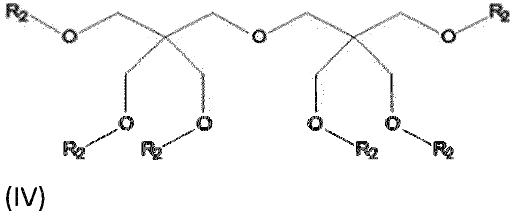 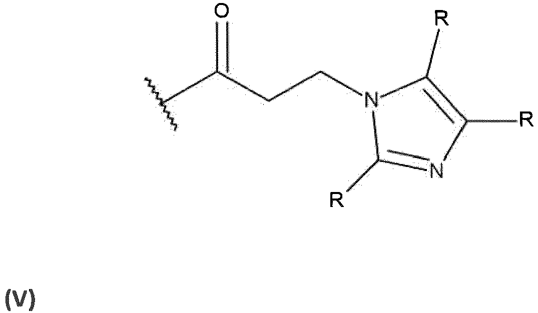 wobei **R₂** = H, **V** der Struktur (**IV**) ein Wasserstoffatom oder die hier gezeigte funktionelle Gruppe (**V**) sein kann;
- **(IV)** ist ein Addukt aus Dipentaerythritolpenta-/hexaacrylat (DPHA) und einem oder mehreren 1H-Imidazolderivat(en); beispielsweise mit **R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl, wobei die Substituenten am Phenylrest **R_{phenyl}** wieder gleich oder ungleich und ausgewählt aus der folgenden Gruppe sein können:
**R_{phenyl}** = Alkyl (linear und verzweigt), Alkoxy, Fluor, Chlor, Brom, Iod, Aldehyd, Keton, Säureester, Säureamid, Phosphonsäurederivat und/oder Sulfonsäurederivat und
**R2** wie oben (**V**) angegeben;
und
- **(VI)** einer Komplex-Verbindung aus Metallsalzen, insbesondere Übergangsmetallsalzen, insbesondere Salzen des Zink, Kupfer, Eisen und/oder Aluminium mit Imidazol- und/oder Pyrazolliganden, abgeleitet von den Strukturen **VIa** und **VIb** 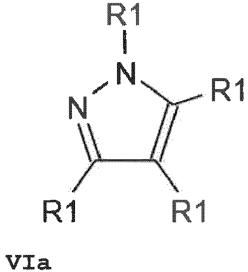 und 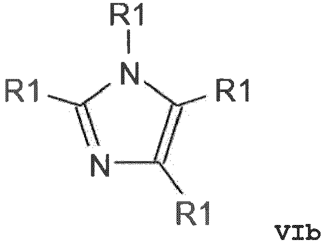 wobei gilt
R1 = gleich oder ungleich und
R1 = H-, Alkyl-, Aryl-, Acyl-, Cyanoalkyl-, Hydroxyalkyl-, Cyanoaryl- und/oder Hydroxyaryl ist.

2. Glimmschutzband nach Anspruch 1, in dem mehrere Band-Beschleuniger eingelagert sind.

3. Glimmschutzband nach einem der vorstehenden Ansprüche 1 oder 2, bei dem der oder die Bandbeschleuniger in der polymeren Matrix und/oder dem Trägerband eingelagert sind.

4. Glimmschutzband nach einem der vorstehenden Ansprüche, wobei als Liganden für die komplexen Salze gemäß der Struktur **VI** zumindest ein Ligand, ausgewählt aus der Liste folgender Liganden, eingesetzt ist:
1,2-Dimethylimidazol (CAS 1739-84-0),
1-Decyl-2-Methylimidazol,
1-Butyl-2-Methylimidazol,
1-Butyl-2-Phenylimidazol,
1H-2-Methylimidazol (CAS-Nr. 693-98-1),
1H-Imidazol (CAS-Nr. 288-32-4),
1H-2-Ethylimidazol (CAS-Nr. 1072-62-4),
1H-2-Propylimidazol (CAS-Nr. 50995-95-4),
1H-2-iso-Propylimidazol (CAS-Nr. 36947-68-9),
1H-2-Butylimidazol (CAS-Nr. 50790-93-7),
1H-2-iso-Butylimidazol (CAS-Nr. 61491- 92-7),
1H-2-tert-Butylimidazol (CAS-Nr. 36947-69-0),
1H-4-tert-Butylimidazol (CAS-Nr. 21149-98-4),
1H- 4(5)-Methylimidazol (CAS-Nr. 822-36-6),
1H-2-Ethyl-4-Methylimidazol (CAS-Nr. 931-36-2),
1H-4-Methyl-2-Phenylimidazol (CAS-Nr. 827-43-0),
1H-4-Phenylimidazol (CAS-Nr. 670-95-1),
1H-5-Methyl-2-Phenylimidazol-4-methanol (CAS-Nr. 13682-32-1),
1H-2,4-Dimethylimidazol (CAS-Nr. 930-62-1),
4(5)-(Hydroxymethyl)imidazol (CAS.-Nr. 822-55-9),
1H-3-Phenylpyrazol (CAS-Nr. 2458-26-6),
1H-5-Methylpyrazol (keine CAS-Nr.),
1H-3,4-Dimethylpyrazol (CAS-Nr. 2820-37-3),
1H-3-tert-Butylpyrazol (CAS-Nr. 15802-80-9),
1H-4-Ethylpyrazol (CAS-Nr. 17072-38-7),
1H-Pyrazol (CAS-Nr. 288-3-1),
1H-3,5-Dimethylpyrazol (CAS-Nr. 67-51-6).

5. Glimmschutzband nach einem der vorstehenden Ansprüche, bei dem Beschleuniger in einer Menge im Bereich von 0,1 g/m² bis 15 g/m², eingelagert ist.

6. Glimmschutzband nach einem der vorstehenden Ansprüche, wobei der in der polymeren Matrix eingebettete Füllstoff globulare, planare, tubulare Füllstoffpartikel und/oder Füllstoffmischungen umfasst.

7. Glimmschutzband nach einem der vorstehenden Ansprüche, wobei die polymere Matrix mehrere Polyvinylalkohole umfasst.

8. Glimmschutzband nach einem der vorstehenden Ansprüche, wobei die polymere Matrix zumindest einen Polyvinylalkohol mit quervernetzten Anteilen umfasst.

9. Glimmschutzband nach einem der vorstehenden Ansprüche, das eine grundierende Beschichtung aufweist.

10. Glimmschutzband nach einem der vorstehenden Ansprüche, das ein Gewicht von kleiner 150 g/m² hat.

11. Glimmschutzband nach einem der vorstehenden Ansprüche, das auf dem Trägerband eine Beschichtung in einer Menge im Bereich von 20 g/m² bis 100 g/m², insbesondere im Bereich von 20 g/m² bis 60 g/m², besonders bevorzugt im Bereich von 30 g/m² bis 45 g/m² hat.

12. Glimmschutzband nach einem der vorstehenden Ansprüche, Füllstoffpartikel umfassend, die in Form von Hohlkörper, massiven Teilchen, beschichteten Teilchen, dotiert und/oder undotiert und/oder als Core-Shell-Teilchen, sowie beliebiger Mischungen daraus, vorliegen.

13. Glimmschutzband nach einem der vorstehenden Ansprüche, mit elektrisch leitfähigem Füllstoff, der Füllstoffpartikel aus den Materialien, Ruß, Graphit, Carbon Nanotubes, Silziumcarbid und/oder Metalloxid, jeweils dotiert oder undotiert, beschichtet oder unbeschichtet vorliegend, sowie beliebige Mischungen daraus, umfasst.

14. Verwendung eines Glimmschutzbandes nach einem der vorhergehenden Ansprüche 1 bis 13 zur Herstellung eines Außenglimmschutzes, einer Innenpotentialsteuerung und/oder eines Endenglimmschutzes einer elektrischen Hochspannungsmaschine.

15. Isoliersystem, geeignet für die Verwendung in einer elektrischen Hochspannungsmaschine, enthaltend
a1) eine Innenpotentialsteuerung und/oder
a2) einen Außenglimmschutz und/oder
a3) einen Endenglimmschutz,
sowie beliebige Kombinationen daraus,
b) ein Glimmschutzband nach einem der Ansprüche 1 bis 13,
wobei das Isoliersystem folgende Quadratwiderstände aufweist, wenn bei einer Feldstärke von 1V/mm gemessen wird
a11) Innenpotentialsteuerung: im Bereich von 0,01 kOhm bis 10 kOhm
a22) Außenglimmschutz: im Bereich von 0,1 bis 100 kOhm und
a33) Endenglimmschutz: im Bereich von 1 x 10⁸ bis 1 x 10¹³ Ohm.

## Claims

1. Corona shielding tape as insulating tape for further processing to wound insulation by means of a process of vacuum pressure impregnating with an anhydride-free impregnating resin, at least comprising a carrier tape, a polymeric matrix with embedded electrically conductive and/or semiconductive filler, and at least one incorporated tape accelerator for the impregnating resin, **characterized in that** the polymeric matrix comprises at least one polyvinyl alcohol and **in that** the incorporated tape accelerator for the impregnating resin is selected from the group of the following chemical compound classes **I** to **IV** and **VI,** where **R₂** on **IV** is identical or nonidentical and **R₂** = **H, V:** 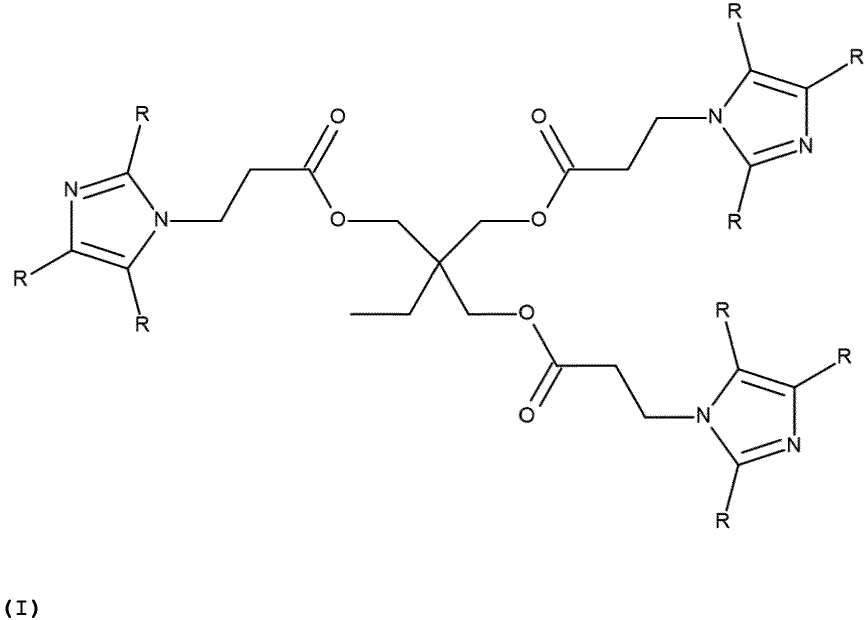
- **(I)** is an adduct of trimethylolpropane triacrylate and one or more 1H-imidazole derivatives; for example where **R** is identical or nonidentical and **R** = H, methyl, ethyl, n-propyl, isopropyl, n-butyl, isobutyl, tert-butyl, phenyl and/or mono-, di-, tri-, tetra-, pentasubstituted phenyl,
where the substituents on the phenyl radical **R_{phenyl}** again may be identical or nonidentical and may be selected from the following group:
**R_{phenyl}** = alkyl (linear and branched), alkoxy, fluorine, chlorine, bromine, iodine, aldehyde, ketone, acid ester, acid amide, phosphonic acid derivative and/or sulfonic acid derivative; 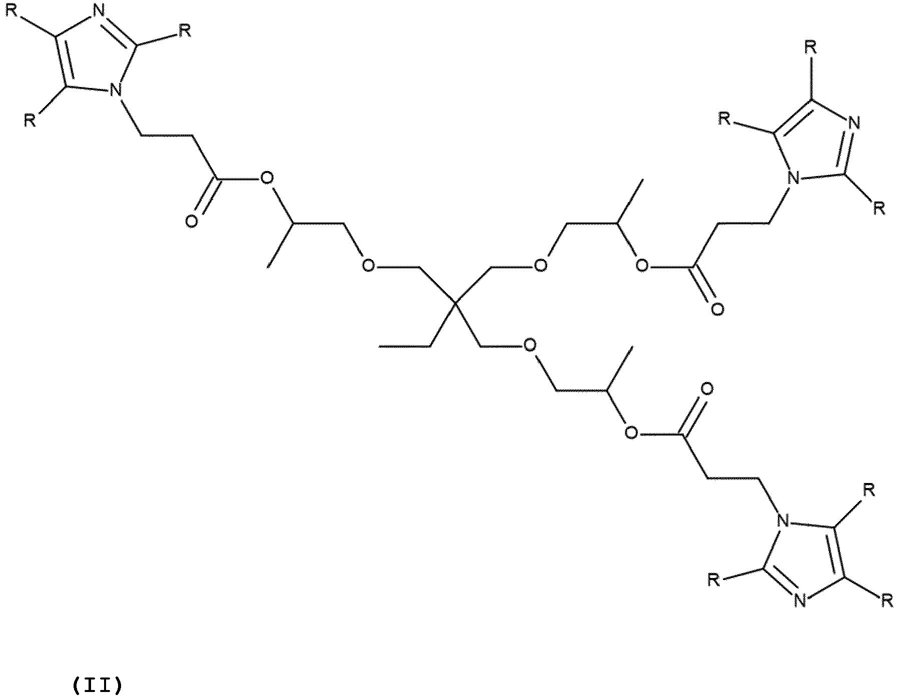
- **(II)** is an adduct of trimethylolpropane propoxylate triacrylate and 1H-imidazole derivatives; for example where
**R** is identical or nonidentical and
**R** = H, methyl, ethyl, n-propyl, isopropyl, n-butyl, isobutyl, tert-butyl, phenyl and/or mono-, di-, tri-, tetra-, pentasubstituted phenyl, where the substituents **R_{phenyl}** on the phenyl radical may again be identical or nonidentical and may be selected from the following group:
**R_{phenyl}** = alkyl (linear and branched), alkoxy, -F, - Cl, -Br, -I, aldehyde, ketone, acid ester, acid amide, phosphonic acid derivative and/or sulfonic acid derivative; 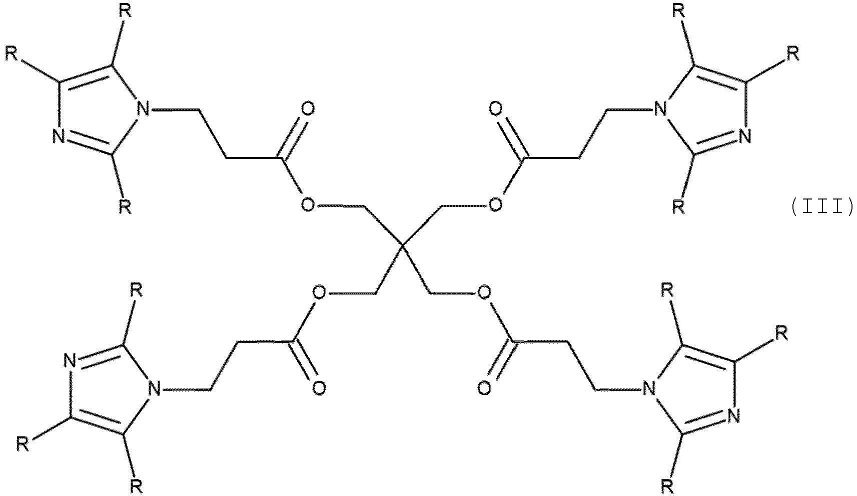
- **(III)** is an adduct of pentaerythritol tetraacrylate (PETA) and one or more 1H-imidazole derivatives;
for example where **R** is identical or nonidentical and **R** = H, methyl, ethyl, n-propyl, isopropyl, n-butyl, isobutyl, tert-butyl, phenyl and/or mono-, di, tri-, tetra-, pentasubstituted phenyl,
where the substituents on the phenyl radical **R_{phenyl}** may again be identical or nonidentical and may be selected from the following group:
**R_{phenyl}** = alkyl (linear and/or branched), alkoxy, fluorine, chlorine, bromine, iodine, aldehyde, ketone, acid ester, acid amide, phosphonic acid derivative and/or sulfonic acid derivative; 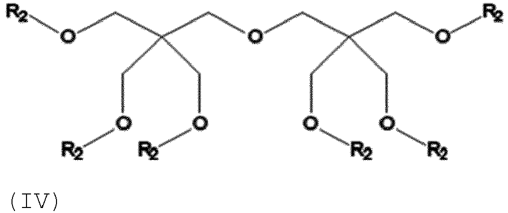 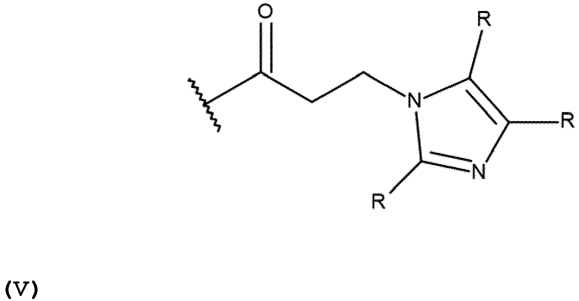
where **R₂** = H, **V** of the structure **(IV)** may be a hydrogen atom or the functional group (**V**) shown here;
- **(IV)** is an adduct of dipentaerythritol penta/hexaacrylate (DPHA) and one or more 1H-imidazole derivatives; for example where **R** is identical or nonidentical and
**R** = H, methyl, ethyl, n-propyl, isopropyl, n-butyl, isobutyl, tert-butyl, phenyl and/or mono-, di-, tri-, tetra-, pentasubstituted phenyl, where the substituents on the phenyl radical **R_{phenyl}** may again be identical or nonidentical and may be selected from the following group:
**R_{phenyl}** = alkyl (linear and branched), alkoxy, fluorine, chlorine, bromine, iodine, aldehyde, ketone, acid ester, acid amide, phosphonic acid derivative and/or sulfonic acid derivative, and
**R2** as indicated above (**V**);
and
- **(VI)** a complex compound composed of metal salts, more particularly transition metal salts, more particularly salts of zinc, copper, iron and/or aluminum, with imidazole and/or pyrazole ligands, derived from the structures **VIa** and **VIb** 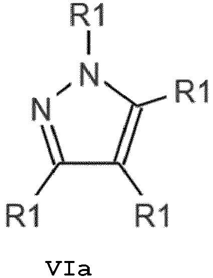 and 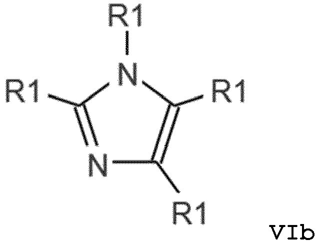 where
R1 = identical or nonidentical and
R1 = H-, alkyl-, aryl-, acyl-, cyanoalkyl-, hydroxyalkyl-, cyanoaryl- and/or hydroxyaryl.

2. Corona shielding tape according to Claim 1, incorporating plural tape accelerators.

3. Corona shielding tape according to either of preceding Claims 1 and 2, wherein the tape accelerator or accelerators is/are incorporated in the polymeric matrix and/or the carrier tape.

4. Corona shielding tape according to any of the preceding claims, wherein, as ligands for the complex salts in accordance with the structure **VI,** at least one ligand selected from the list of the following ligands is used:
1,2-dimethylimidazole (CAS 1739-84-0),
1-decyl-2-methylimidazole,
1-butyl-2-methylimidazole,
1-butyl-2-phenylimidazole,
1H-2-methylimidazole (CAS No. 693-98-1),
1H-imidazole (CAS No. 288-32-4),
1H-2-ethylimidazole (CAS No. 1072-62-4),
1H-2-propylimidazole (CAS No. 50995-94-4),
1H-2-isopropylimidazole (CAS No. 36947-68-9),
1H-2-butylimidazole (CAS No. 50790-93-7),
1H-2-isobutylimidazole (CAS No. 61491-92-7),
1H-2-tert-butylimidazole (CAS No. 36947-69-0),
1H-4-tert-butylimidazole (CAS No. 21149-98-4),
1H-4(5)-methylimidazole (CAS No. 822-36-6),
1H-2-ethyl-4-methylimidazole (CAS No. 931-36-2),
1H-4-methyl-2-phenylimidazole (CAS No. 827-43-0),
1H-4-phenylimidazole (CAS No. 670-95-1),
1H-5-methyl-2-phenylimidazole-4-methanol (CAS No. 13682-32-1),
1H-2,4-dimethylimidazole (CAS No. 930-62-1),
4(5)-(hydroxymethyl)imidazole (CAS No. 822-55-9),
1H-3-phenylpyrazole (CAS No. 2458-26-6),
1H-5-methylpyrazole (no CAS No.),
1H-3,4-dimethylpyrazole (CAS No. 2820-37-3),
1H-3-tert-butylpyrazole (CAS No. 15802-80-9),
1H-4-ethylpyrazole (CAS No. 17072-38-7),
1H-pyrazole (CAS No. 288-3-1),
1H-3,5-dimethylpyrazole (CAS No. 67-51-6).

5. Corona shielding tape according to any of the preceding claims, wherein accelerator is incorporated in an amount in the range from 0.1 g/m² to 15 g/m².

6. Corona shielding tape according to any of the preceding claims, wherein the filler embedded in the polymeric matrix comprises globular, planar, tubular filler particles and/or filler mixtures.

7. Corona shielding tape according to any of the preceding claims, wherein the polymeric matrix comprises plural polyvinyl alcohols.

8. Corona shielding tape according to any of the preceding claims, wherein the polymeric matrix comprises at least one polyvinyl alcohol having crosslinked fractions.

9. Corona shielding tape according to any of the preceding claims, which comprises a priming coating.

10. Corona shielding tape according to any of the preceding claims, which has a weight of less than 150 g/m².

11. Corona shielding tape according to any of the preceding claims, which on the carrier tape has a coating in an amount in the range from 20 g/m² to 100 g/m², more particularly in the range from 20 g/m² to 60 g/m², very preferably in the range from 30 g/m² to 45 g/m².

12. Corona shielding tape according to any of the preceding claims, comprising filler particles which are present in the form of hollow bodies, solid particles, coated particles, doped and/or undoped and/or as core-shell particles, and also any desired mixtures thereof.

13. Corona shielding tape according to any of the preceding claims, having electrically conductive filler which comprises filler particles composed of the materials carbon black, graphite, carbon nanotubes, silicon carbide and/or metal oxide, present in each case doped or undoped, coated or uncoated, and also any desired mixtures thereof.

14. Use of a corona shielding tape according to any of preceding Claims 1 to 13 for producing an external corona shield, an internal potential control and/or a terminal corona shield of an electrical high-voltage machine.

15. Insulating system suitable for use in an electrical high-voltage machine, comprising
a1) an internal potential control and/or
a2) an external corona shield and/or
a3) a terminal corona shield,
and also any desired combinations thereof,
b) a corona shielding tape according to any of Claims 1 to 13,
where the insulating system exhibits the following square resistances as measured at a field strength of 1 V/mm
a11) internal potential control: in the range from 0.01 kohm to 10 kohm
a22) external corona shield: in the range from 0.1 to 100 kohm and
a33) terminal corona shield: in the range from 1 × 10⁸ to 1 × 10¹³ ohm.

## Revendications

1. Bande de protection contre les décharges corona comme bande d'isolation pour la transformation en isolation par enroulement au moyen d'un procédé d'imprégnation sous vide-pression avec une résine d'imprégnation exempte d'anhydride, comprenant au moins une bande de support, une matrice polymérique pourvue d'une charge intégrée électriquement conductrice et/ou semi-conductrice et au moins un accélérateur de bande incorporé pour la résine d'imprégnation, **caractérisée en ce que** la matrice polymérique comprend au moins un poly(alcool vinylique) et **en ce que** l'accélérateur de bande incorporé pour la résine d'imprégnation est choisi dans le groupe de classes de composés chimiques suivantes I à IV et VI avec R₂ identique ou différent dans IV et R₂ = H, V : 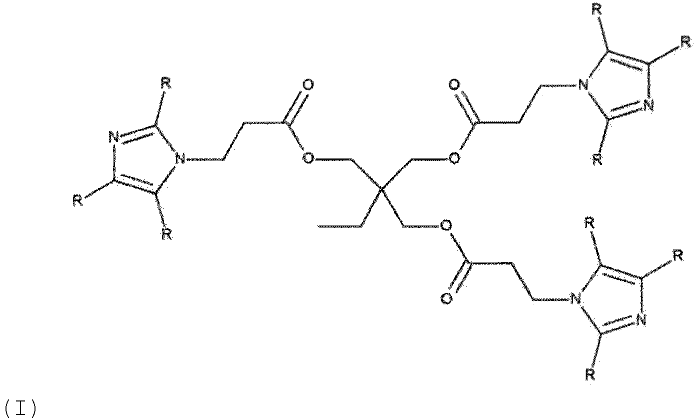
- (I) est un adduit de triacrylate de triméthylolpropane - et d'un ou plusieurs dérivé(s) de 1H-imidazole ; par exemple avec R, identiques ou différents et
R = H, méthyle, éthyle, n-propyle, iso-propyle, n-butyle, iso-butyle, tert-butyle, phényle et/ou phényle monosubstitué, disubstitué, trisubstitué, tétrasubstitué, pentasubstitué,
les substituants au niveau du radical phényle R_{phényle} pouvant à nouveau être identiques ou différents et être choisis dans le groupe suivant :
R_{phényle} = alkyle (linéaire et ramifié), alcoxy, fluor, chlore, brome, iode, aldéhyde, cétone, ester d'acide, amide d'acide, dérivé d'acide phosphonique et/ou dérivé d'acide sulfonique ; 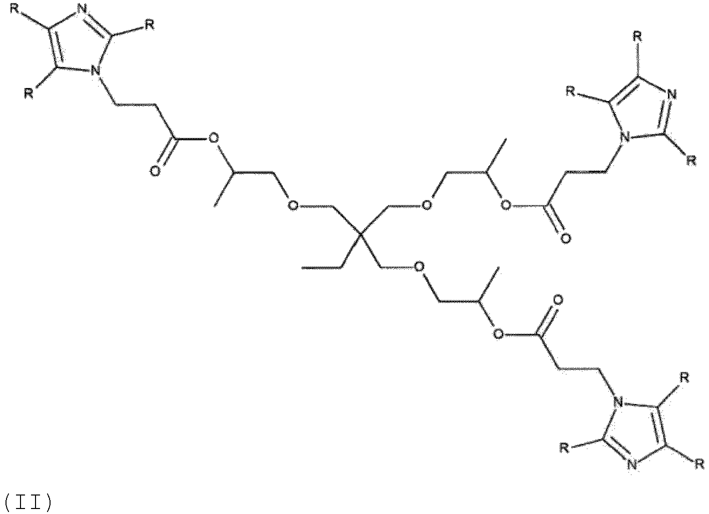
- (II) représente un adduit de triacrylate propoxylate de triméthylolpropane et de dérivés de 1H-imidazole ; par exemple avec
R identique ou différent et
R = H, méthyle, éthyle, n-propyle, iso-propyle, n-butyle, iso-butyle, tert-butyle, phényle et/ou phényle monosubstitué, disubstitué, trisubstitué, tétrasubstitué, pentasubstitué,
les substituants R_{phényle} au niveau du radical phényle pouvant à nouveau être identiques ou différents et être choisis dans le groupe suivant :
R_{phényle} = alkyle (linéaire et ramifié), alcoxy, -F, -Cl, -Br, -I, aldéhyde, cétone, ester d'acide, amide d'acide, dérivé d'acide phosphonique et/ou dérivé d'acide sulfonique ; 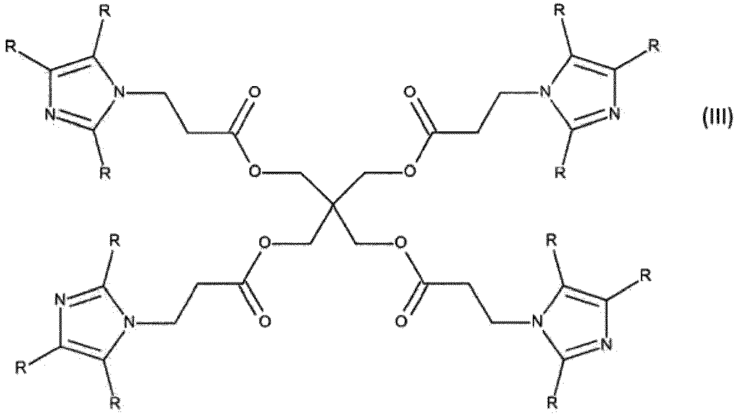
- (III) représente un adduit de tétraacrylate de pentaérythritol (PETA) et d'un ou plusieurs dérivé(s) de 1H-imidazole ;
par exemple avec R identique ou différent et R = H, méthyle, éthyle, n-propyle, iso-propyle, n-butyle, iso-butyle, tert-butyle, phényle et/ou phényle monosubstitué, disubstitué, trisubstitué, tétrasubstitué, pentasubstitué,
les substituants au niveau du radical phényle R_{phényle} pouvant à nouveau être identiques ou différents et être choisis dans le groupe suivant :
R_{phényle} = alkyle (linéaire et/ou ramifié), alcoxy, fluor, chlore, brome, iode, aldéhyde, cétone, ester d'acide, amide d'acide, dérivé d'acide phosphonique et/ou dérivé d'acide sulfonique ; 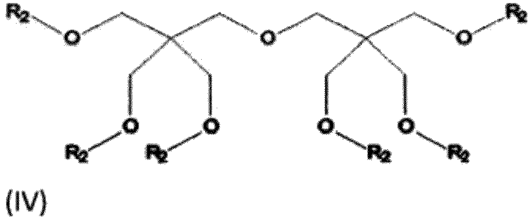 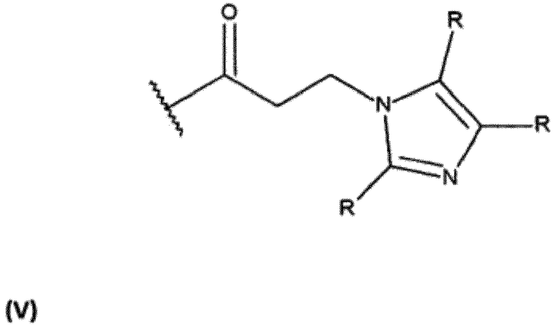
R₂ = H, V de la structure (IV) pouvant être un atome d'hydrogène ou le groupe fonctionnel (V) montré ici ;
- (IV) est un adduit de penta/hexaacrylate de dipentaérythritol (DPHA) et d'un ou plusieurs dérivé(s) de 1H-imidazole ; par exemple avec R identique ou différent et
R = H, méthyle, éthyle, n-propyle, iso-propyle, n-butyle, iso-butyle, tert-butyle, phényle et/ou phényle monosubstitué, disubstitué, trisubstitué, tétrasubstitué, pentasubstitué,
les substituants au niveau du radical phényle R_{phényle} pouvant à nouveau être identiques ou différents et être choisis dans le groupe suivant :
R_{phényle} = alkyle (linéaire et ramifié), alcoxy, fluor, chlore, brome, iode, aldéhyde, cétone, ester d'acide, amide d'acide, dérivé d'acide phosphonique et/ou dérivé d'acide sulfonique et
R₂ comme (V) indiqué ci-dessus ;
et
- (VI) un composé de type complexe composé de sels métalliques, en particulier de sels de métaux de transition, en particulier de sels de zinc, de cuivre, de fer et/ou d'aluminium avec des ligands de type imidazole et/ou pyrazole, issus des structures VIa et VIb 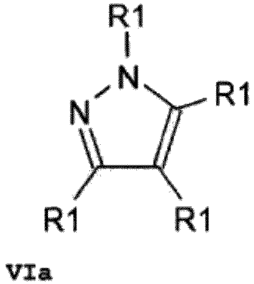 et 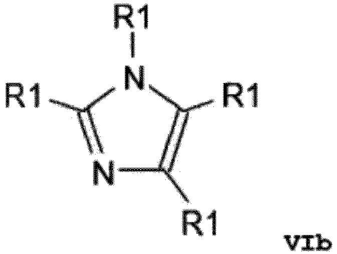 avec
R1 = identique ou différent et
R1 = H-, alkyle-, aryle-, acyle-, cyanoalkyle-, hydroxyalkyle-, cyanoaryle- et/ou hydroxyaryle.

2. Bande de protection contre les décharges corona selon la revendication 1, dans laquelle plusieurs accélérateurs de bande sont incorporés.

3. Bande de protection contre les décharges corona selon l'une quelconque des revendications précédentes 1 et 2, dans laquelle l'accélérateur ou les accélérateurs de bande sont incorporés dans la matrice polymérique et/ou dans la bande de support.

4. Bande de protection contre les décharges corona selon l'une quelconque des revendications précédentes, au moins un ligand choisi dans la liste de ligands suivants est utilisé en tant que ligand pour les sels complexes selon la structure VI :
1,2-diméthylimidazole (CAS 1739-84-0),
1-décyl-2-méthylimidazole,
1-butyl-2-méthylimidazole,
1-butyl-2-phénylimidazole,
1H-2-méthylimidazole (n° CAS 693-98-1),
1H-imidazole (n° CAS 288-32-4),
1H-2-éthylimidazole (n° CAS 1072-62-4),
1H-2-propylimidazole (n° CAS 50995-95-4),
1H-2-iso-propylimidazole (n° CAS 36947-68-9),
1H-2-butylimidazole (n° CAS 50790-93-7),
1H-2-iso-butylimidazole (n° CAS 61491-92-7),
1H-2-tert-butylimidazole (n° CAS 36947-69-0),
1H-4-tert-butylimidazole (n° CAS 21149-98-4),
1H-4(5)-méthylimidazole (n° CAS 822-36-6),
1H-2-éthyl-4-méthylimidazole (n° CAS 931-36-2),
1H-4-méthyl-2-phénylimidazole (n° CAS 827-43-0),
1H-4-phénylimidazole (n° CAS 670-95-1),
1H-5-méthyl-2-phénylimidazol-4-méthanol (n° CAS 13682-32-1),
1H-2,4-diméthylimidazole (n° CAS 930-62-1),
4(5)-(hydroxyméthyl)imidazole (n° CAS 822-55-9),
1H-3-phénylpyrazole (n° CAS 2458-26-6),
1H-5-méthylpyrazole (pas de n° CAS),
1H-3,4-diméthylpyrazole (n° CAS 2820-37-3),
1H-3-tert-butylpyrazole (n° CAS 15802-80-9),
1H-4-éthylpyrazole (n° CAS 17072-38-7),
1H-pyrazole (n° CAS 288-3-1),
1H-3,5-diméthylpyrazole (n° CAS 67-51-6).

5. Bande de protection contre les décharges corona selon l'une quelconque des revendications précédentes, dans laquelle l'accélérateur est incorporé en une quantité dans la plage de 0,1 g/m² à 15 g/m².

6. Bande de protection contre les décharges corona selon l'une quelconque des revendications précédentes, la charge intégrée dans la matrice polymérique comprenant des particules de charge et/ou des mélanges de charges globulaires, planes, tubulaires.

7. Bande de protection contre les décharges corona selon l'une quelconque des revendications précédentes, la matrice polymérique comprenant plusieurs poly(alcool vinylique).

8. Bande de protection contre les décharges corona selon l'une quelconque des revendications précédentes, la matrice polymérique comprenant au moins un poly(alcool vinylique) comportant des parties réticulées.

9. Bande de protection contre les décharges corona selon l'une quelconque des revendications précédentes, qui présente un revêtement de base.

10. Bande de protection contre les décharges corona selon l'une quelconque des revendications précédentes, qui possède un poids inférieur à 150 g/m².

11. Bande de protection contre les décharges corona selon l'une quelconque des revendications précédentes, qui possède, sur la bande de support, un revêtement en une quantité dans la plage de 20 g/m² à 100 g/m², en particulier dans la plage de 20 g/m² à 60 g/m², particulièrement préférablement dans la plage de 30 g/m² à 45 g/m².

12. Bande de protection contre les décharges corona selon l'une quelconque des revendications précédentes, comprenant des particules de charge, qui sont présentes sous forme de corps creux, de particules massives, de particules revêtues, dopées et/ou non dopées et/ou comme particules noyau-enveloppe, ainsi que de quelconques mélanges correspondants.

13. Bande de protection contre les décharges corona selon l'une quelconque des revendications précédentes, comportant une charge électriquement conductrice, qui comprend des particules de charge composées des matériaux de type suie, graphite, nanotubes de carbone, carbure de silicium et/ou oxyde métallique, présentes à chaque fois sous forme dopée ou non dopée, revêtue ou non revêtue, ainsi que de quelconques mélanges correspondants.

14. Utilisation d'une bande de protection contre les décharges corona selon l'une quelconque des revendications 1 à 13 pour la préparation d'une protection externe contre les décharges corona, d'une commande de potentiel intérieur et/ou d'une protection terminale contre les décharges corona d'une machine électrique à haute tension.

15. Système d'isolation, approprié pour l'utilisation dans une machine électrique à haute tension, contenant
a1) une commande de potentiel intérieur et/ou
a2) une protection externe contre les décharges corona et/ou
a3) une protection terminale contre les décharges corona,
ainsi que de quelconques combinaisons correspondantes,
b) une bande de protection contre les décharges corona selon l'une quelconque des revendications 1 à 13,
le système d'isolation présentant les résistances carrées suivantes lors d'une mesure à une intensité de champ de 1 V/mm
a11) commande de potentiel intérieur : dans la plage de 0,01 kOhm à 10 kOhm
a22) protection externe contre les décharges corona : dans la plage de 0,1 à 100 kOhm et
a33) protection terminale contre les décharges corona : dans la plage de 1 x 10⁸ à 1 x 10¹³ Ohm.
